# EUROPEAN PATENT SPECIFICATION

(11) **EP 3 988 276 B1**
(45) Date of publication and mention of the grant of the patent: **20.09.2023**
(21) Application number: 21201323.9
(22) Date of filing: 06.10.2021
(51) Int. Cl.: B29C 51/46, B29C 51/42, B29C 51/06, B29C 51/18, B29C 51/26, B29C 51/10

(54) **CONTROL METHOD AND THERMOFORMING MACHINE**
STEUERUNGSVERFAHREN UND THERMOFORMMASCHINE
PROCÉDÉ DE COMMANDE ET MACHINE DE THERMOFORMAGE

(30) Priority: 26.10.2020 IT 202000025291
(43) Date of publication of application: 27.04.2022
(73) Proprietor: C.M.S. S.p.A., 24019 Zogno (BG) (IT)
(72) Inventor: GAIAZZI, Fabio, 21040 Sumirago (VA) (IT)
(74) Representative: Luppi Intellectual Property S.r.l.

(56) References cited:
- DE-A1-102012 005 179
- US-A1- 2002 062 161

## Description

The invention concerns a control method for controlling a shape/geometry of an article. In particular, the invention refers to a control method for controlling the shape/geometry of an article made of plastics, in a thermoforming machine, and to a thermoforming machine configured to apply this method.

Thermoforming machines are known for thermoforming an article made of thermoplastic material, for example in the form of a plate, sheet or film, to produce finished products such as shells for suitcases, sports equipment, parts of vehicles, bathtubs, and the like. Such thermoforming machines comprise at least one mold, a frame element or plate-pressing frame, an upper heating device and a lower heating device. The upper and lower heating devices each comprises a plurality of resistances and are movable in mutual approach/move-away to soften the article before forming through at least one mold. The mold is positioned below the article, while the plate-pressing frame is positioned above the article.

The thermoforming machines also comprise blowing/suction means operatively positioned below the article and connected both to a generating source of pressurized air that can be operated to deliver a jet of pressurized air onto the softened article, inflating/deforming it, and to a device for generating vacuum, for example a vacuum pump, arranged to create a state of depression on the softened article so that it assumes the shape of the walls of the mold. The inflated article can assume, depending on the case, a substantially regular shape, for example similar to a semi-bubble, or semi-ball, or a substantially irregular shape.

It is often required to control the shape of the inflated article before it is made to adhere to the walls of the mold, in order to prevent the finished article, also called deep drawn article, from having evident and unwanted defects, for example wrinkles, cracks, tears at junctions, thinning, thickness variations, and so on.

A known control method for controlling the shape of the inflated article may include a qualitative visual inspection, by an operator, of the newly inflated article. The operator, thanks to the experience gained, is able to establish whether the shape assumed by the article is substantially congruent with a desired shape. This method is in fact very approximate and has now fallen into disuse.

Another control method comprises visualizing locally an area of the inflated article, for example a central area, and measuring a vertical dimension (i.e. in a direction orthogonal to a plane on which the thermoforming machine rests) reached by the inflated article in that area. The area of the article is displayed by known sensor means, for example by means of a photocell, the vertical height is therefore calculated/measured by a processor associated with the photocell.

The method provides for comparing the value of the measured height of the real article with a value of a desired height, in the same area, of a virtual inflated article, this desired height being obtained from design calculations and/or experimental results and/or virtual simulations performed using CAD/CAM systems. If the value of the measured height of the real inflated article is substantially equal to the value of the desired height of the virtual inflated article, after deep drawing the real deep drawn article should not have any defects.

This method has some defects as it has been verified that the drawn article has surface defects both when the two dimensions are different, and when the two dimensions are substantially the same. All this is linked to the fact that the entire geometry of the article is associated and drawn to a measure and a local dimensional value, in particular the value of the assumed height. Although each resistance is designed to heat a certain area of the thermoplastic material article and a thermal power value is set for each resistance, often the actual heat transmitted by each resistance is not equal to the theoretical heat predicted by the calculations and simulations indicated above. This is due to the thermal changes present in the environments in which the thermoforming machines are positioned, for example in industrial warehouses.

A local measurement of the shape of the article may therefore not be sufficient to establish whether the article as a whole is free from defects after being drawn.

Another defect of the control method described above is that it fails to guarantee, over time, a satisfactory qualitative stability of the production.
**Each of documents** DE 102012005179 A1 **and** US 2002/062161 A1 **discloses a method as in the preamble of claim 1.**

An object of the present invention is to improve the methods of controlling a shape of an article in a thermoforming machine.

An object is to provide a method of controlling a shape of an article in a thermoforming machine that is effective, regardless of the operator's experience and a local measurement performed on the article.

An object is to provide a method of controlling a shape of an article in a thermoforming machine which allows to improve, with respect to known methods, the thermoforming machine which allows to improve, with respect to known methods, the qualitative stability of the production.

An object is to improve thermoforming machines.

An advantage is to provide a control method that allows to detect the shape/geometry of the entire inflated and drawn article, and to correct the process parameters on the basis of a comparison between the measured shapes/geometries and the shapes/geometries you want.

An advantage is to provide a control method that allows you to check the shape/geometry of the entire drawn article and correct the process parameters in feedback based on a comparison between the measured shapes/geometries and the desired shapes/geometries.

These objects and others besides are achieved by a method of controlling a shape/geometry of an article in a thermoforming machine and by a thermoforming machine, as described in one or more of the independent claims.

The invention can be better understood and implemented with reference to the attached drawings which illustrate an exemplary and non-limiting form of implementation, in which:
Figure 1 is a perspective view of a thermoforming machine according to the invention;

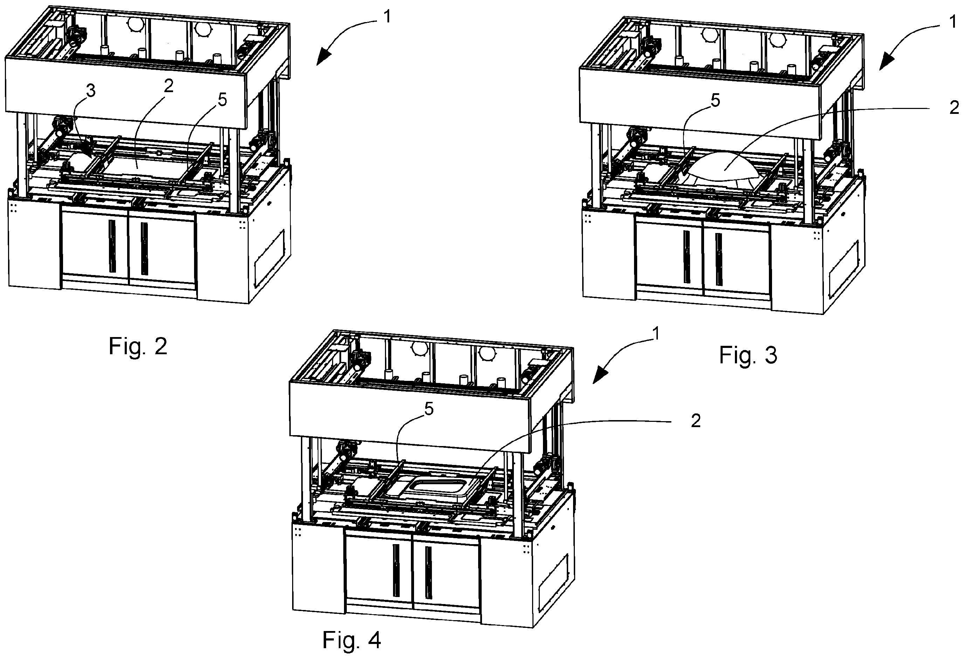

Figures 2, 3 and 4 are perspective views of the machine of Figure 1 in which some steps of the thermoforming cycle of an article in plastic material are shown;
Figures 5 and 5A show a first embodiment of a support unit of detection sensor means included in the machine of Figure 1 arranged to detect a geometry of the article, respectively in an inflated and a drawn state;
Figures 6 and 6A show a second embodiment of a support unit of sensor means for detecting the geometry of the article in the inflated and drawn state;
Figures 7 and 7A show a third embodiment of a support unit of sensor means for detecting the geometry of the article in the inflated and drawn state;
Figures 8 and 8A show a fourth embodiment of a support unit of sensor means for detecting the geometry of the article in the inflated and drawn state.

With reference to the attached figures, the numerical reference 1 indicates a thermoforming machine arranged to thermoform an article 2 made of thermoplastic material, for example in the form of a plate, sheet or film, to make finished products, also called deep-drawn products, such as for example suitcase shells, sports equipment, tubs, vehicle parts and the like.

By plate or sheet is meant a body which has two main dimensions with respect to the third and which is delimited by two opposite surfaces located at a mutual distance, for example the thickness of the plate or sheet, which is relatively small.

The thermoforming machine 1 may be a numerically controlled machine.

The thermoforming machine 1 may comprise, in particular, a support frame 10, a support surface 3 for supporting plate or sheet material, for example for supporting the material in a horizontal position.

The thermoforming machine 1 may comprise a forming mold, not shown, for example positioned below the support surface 3. The forming mold comprises a contact surface intended to come into contact with the article 2 to be thermoformed, such contact surface being shaped to give its shape to the article. The forming mold may be movable with respect to the support surface 3 approaching and/or moving away from the article 2, as will be explained later.

The thermoforming machine 1 may comprise at least one frame element 5, or plate-pressing frame, operatively positioned above the support surface 3. The frame element 5 may be moved away from, and/or towards, article 2 at least in a transverse direction with respect to the orientation of the support surface 3.

The frame element 5 may comprise a perimeter structure that defines a central opening located vertically above the shaped surface of the mold and/or above the article 2 positioned on the support surface 3.

The perimeter structure of the frame element 5 may be closed-loop, for example rectangular in shape, and may comprise an edge portion facing the article 2 and arranged to come into contact with, and press on, a portion of the perimeter surface of the article 2.

In particular, the frame element 5 may assume an upper position in which it is placed at a distance from the article 2, which can consequently be positioned on the support surface 3, and a lower position in which the edge portion is in contact with, and presses on, the perimeter surface portion of the article 2.

A gasket may be provided on the edge portion of the frame element 5 to prevent the passage of a fluid between the frame element 5 and the article 2, creating a hermetic seal.

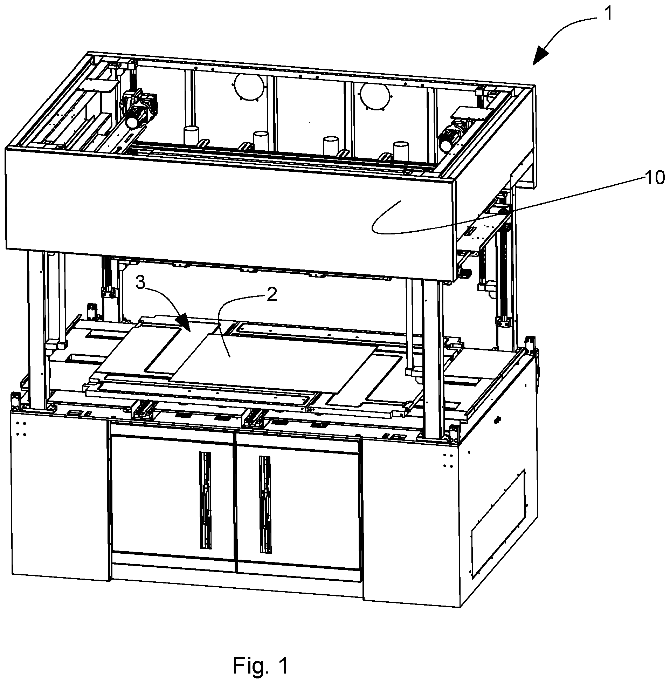

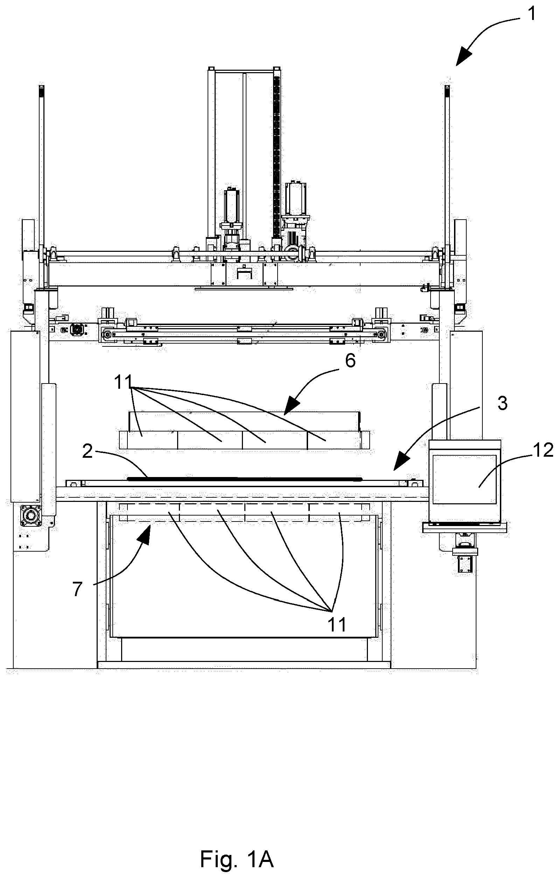

The thermoforming machine 1 comprises at least one heating assembly facing a surface of the article 2 and arranged, in use, to heat this surface of the article 2. In particular, the thermoforming machine 1 comprises an upper heating assembly 6 and a lower heating assembly 7, where upper and lower are to be referred to the position of the article 2 on the support surface 3. The upper heating assembly 6 and the lower heating assembly 7 are schematically shown in figure 1A, and are movable in mutual approach/move-away to heat, especially to soften, the article 2.

The upper and lower heating assemblies 6, 7 each comprises a plurality of respective heating elements 11 schematically represented in the form of rectangles in Figure 1A, for example comprising quartz or ceramic or halogen resistances.

In particular, in use, each heating element 11 is configured to heat, at each heating cycle, a corresponding area, facing it, of the article 2 to be thermoformed.

The thermoforming machine 1 also comprises blowing or suction means, not shown, which may be connected, in use, alternatively to a compressed fluid dispensing device or to a device for generating vacuum. The blowing means comprises a plurality of shaped mouths to be crossed by a fluid, for example air, and are positioned below the article 2 to be thermoformed.

The thermoforming machine 1 is configured to perform a thermoforming cycle on the article to obtain a finished product, also called deep drawn product, starting from the sheet or film of plastics positioned on the support surface 3.

The thermoforming cycle may include a step of bringing the frame element 5 into contact with the peripheral surface of the article. The peripheral surface of article 2 is fixed/constrained on the support surface 3 by the frame element 5.

The thermoforming cycle may comprise the step of setting a power value for the plurality of heating elements 11 and/or a delivery time value of thermal power delivered by the plurality of heating elements 11, so as to create a distribution of heat on the article such as to heat, in particular to soften, each area of the article.

The set heat power value and/or the heat delivery time value may be different for each heating element 11 based on the heat it is desired to supply to each area of the article associated with that heating element, and on the basis of the geometry that article 2 will have to assume at the end of the forming, for example variation in thickness or connection angles of the deep drawn, and so on.

Once the softening state has been reached, a step of the thermoforming cycle comprises delivering on the article, from bottom to top, a flow of pressurized fluid, for example air, through the blowing means. In this step, the blowing means is connected to the compressed fluid dispensing device, for example a compressor.

A pressure force is uniformly applied on the lower surface of the softened article 2; consequently, the article 2, in particular the portion of the article not interposed/blocked between the plate-pressing frame 5 and the support surface 3, begins to swell, i.e. to deform, assuming a deformed and substantially concave configuration, with the concavity facing towards the support surface 3.

In the attached figures, the article 2 is deformed, inflated, assuming a substantially regular geometry, for example in the shape of a semi-bubble or sphere. The deformed article 2 may also assume an irregular shape. The geometry assumed by the inflated article depends on the process parameters indicated above, for example the temperature reached by each area of the article due to heating, on the force with which the peripheral surface of the article is held by the frame element 5, on the force exerted by the pressurized air, and so on.

A step of the thermoforming cycle comprises bringing the forming mold closer to the deformed/inflated article 2.

A step of the thermoforming cycle comprises creating a state of vacuum between article 2 and the forming mold, sucking the air present through the suction means. In this phase the suction means is connected to the vacuum generating device, for example the vacuum pump.

A state of depression is generated on the article 2 which again deforms the geometry and brings the article 2 into contact/adherence with the surface of the forming mold; the article 2 is therefore deep drawn and assumes a final geometry substantially complementary to that of the surface of the mold.

The thermoforming machine 1 comprises detection sensor means 8 arranged to detect a geometry assumed by the article 2 in a step of the thermoforming cycle. The detection sensor means is positioned above the support surface 3 where the article 2 is positioned.

The detection sensor means 8 is arranged to measure in real time, therefore at any time or step of the thermoforming cycle, the distance between themselves and the article.

The detection sensor means 8 may comprise vision devices, for example a "Time Of Fly" type camera, arranged to estimate in real time the distance from the framed object by measuring the time that a light pulse is needed to cover the camera-item-camera distance. The vision devices may further comprise a stereoscopic camera.

The detection sensor means may comprise electrical devices, such as for example one or more photocells.

The detection sensor means may comprise laser sensors, ultrasonic sensors, radar sensors, magnetic sensors and other the like.

In the versions shown in the attached figures, the detection sensor means 8 is mounted on a support unit 9; 109; 209; 309 included in the thermoforming machine 1.

The support unit 9; 109; 209; 309 is mounted on an upper portion of the support frame 10. In particular, with reference to the attached figures, the support unit 9; 109; 209; 309 is mounted above the support surface 3 in a vertical direction, i.e. in a direction transversal with respect to a plane on which the thermoforming machine 1 rests.

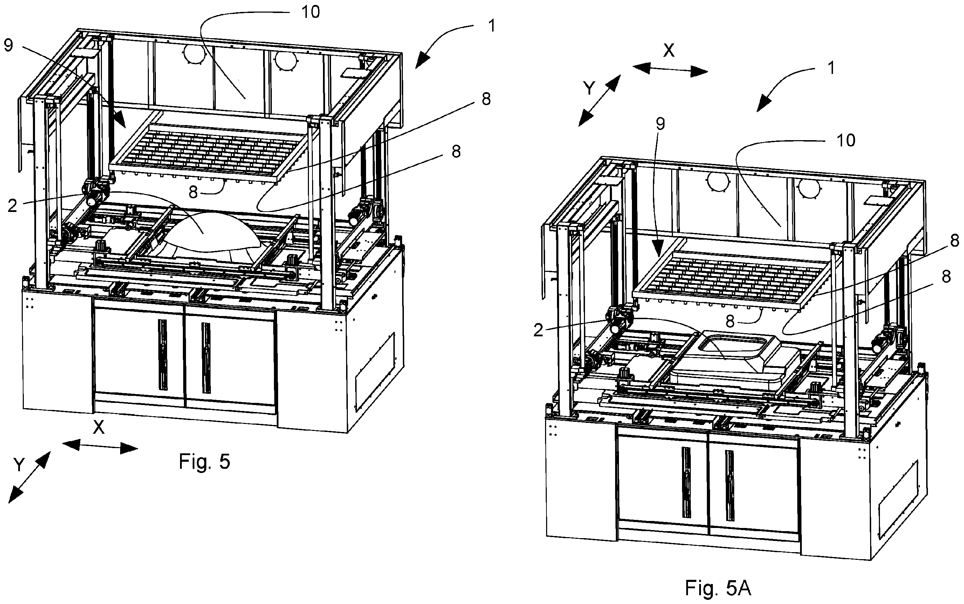

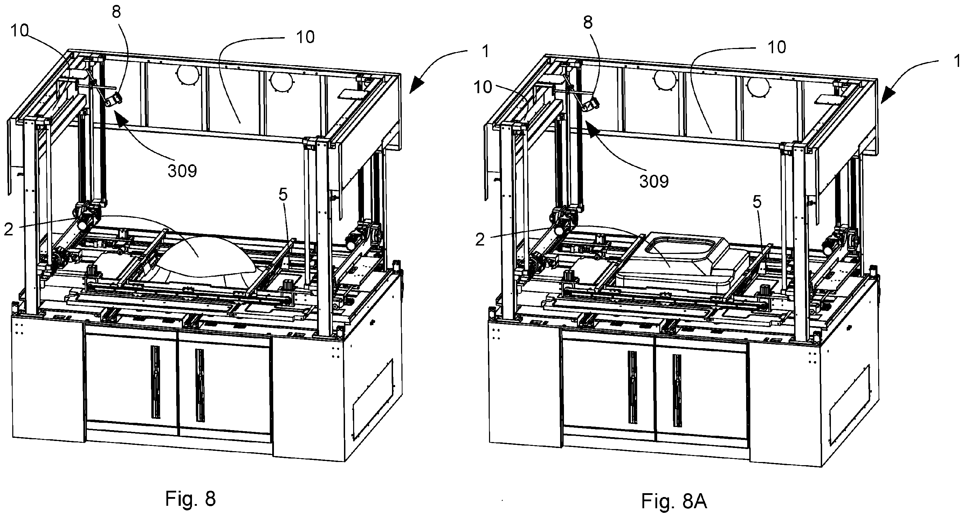

In a version shown in Figures 5, 5A, 8 and 8A, the support unit 9, 309 is fixed with respect to the support surface 3. In particular, the support unit 9, 309 is fixed to the upper portion of the support frame 10.

With reference to Figures 5, 5A the support unit 9 has dimensions substantially comparable with the dimensions of the support surface 3. The support unit 9 comprises a support grid and a plurality of detection sensors 8 are mounted on this support grid so as to form a matrix of detection sensors, as explained below.

The support grid 9 comprises a perimeter structure to which a plurality of support bars positioned parallel to each other are fixed. A plurality of sensors 8, for example photocells, or cameras, or magnetic sensors, or any other sensor means indicated above are mounted in succession on each support bar. Looking at Figure 5, each detection sensor 8 is substantially aligned with a further detection sensor along both a first direction X and a second direction Y, where the first direction X and the second direction Y are directions transverse to each other, in particular orthogonal, and both belong to a plane parallel to the plane on which the thermoforming machine 1 rests.

Thanks to the dimensions of the support grid and the positioning of the sensors to form a matrix, the possibility of framing the entire geometry of the article during the thermoforming cycle is ensured.

With reference to Figure 8, or 8A, the support unit 309 comprises at least one support rod fixed to the upper portion of the support frame 10 and on which is rotatably mounted a detection sensor 8 arranged to frame the article. In particular, the support unit 309 comprises a plurality of support rods, a first rod being fixed to the upper portion of the support frame 10 by means of a support bracket, and a second rod being rotatably connected to the first rod; a detection sensor 8 is mounted on the second rod, for example a camera that frames the article 2. The second rod is rotatable with respect to the first rod to allow adjustment of the angular position of the camera based on the dimensions of the article to be framed before that the thermoforming cycle begins.

Thanks to the positioning of the support unit and the type of camera used, it is possible to frame and detect the entire geometry assumed by the article at any stage of the forming cycle.

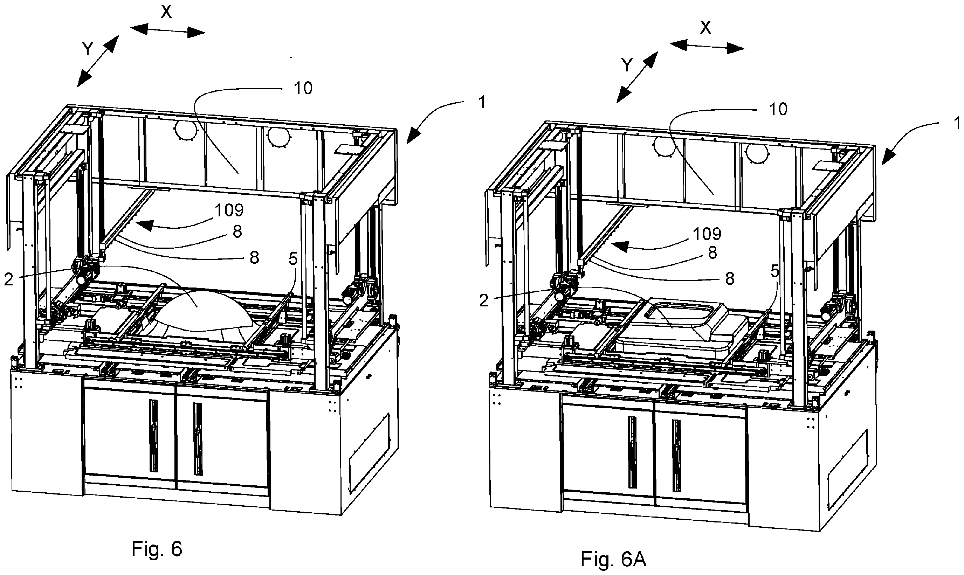

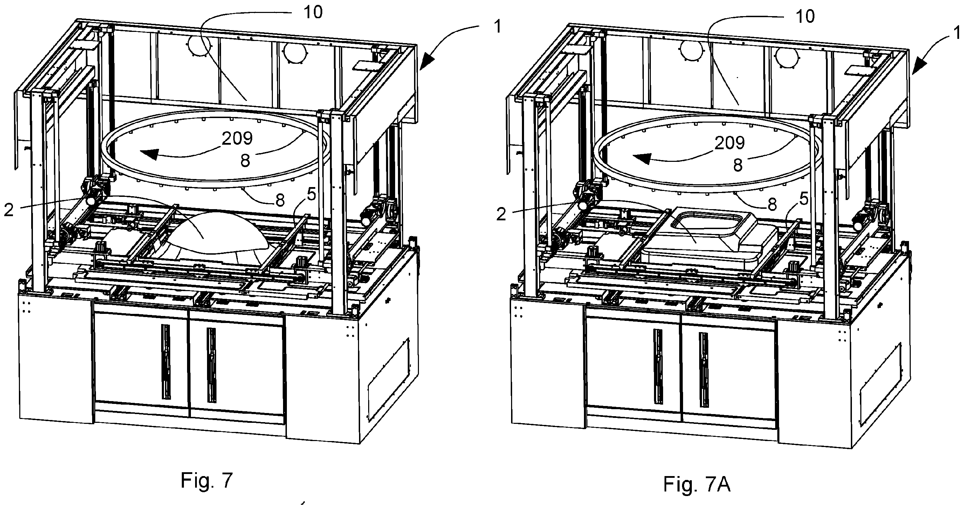

In another version shown in Figures 6, 6A, 7 and 7A, the support unit 109; 209 is movable with respect to the support surface 3.

In the version shown in Figure 6, 6A the support unit 109 comprises a bar, on which the detection sensors 8 are mounted, preferably in a row. In particular, the support bar is mounted slidingly on the upper portion of the support frame 10 to slide on a guide obtained, or provided, on this upper portion along the first direction X defined previously. The bar extends in the second direction Y; the dimension of the bar along the second direction Y is comparable with the dimension of the support surface 3 measured along this second direction Y.

The bar can extend along the direction parallel to the first direction X and move along the second direction Y.

Thanks to the mobility of the support unit 109 with respect to the support surface 3, it is possible to move the sensors 8 during the execution of the thermoforming cycle to detect the entire geometry assumed by the article.

In a version shown in Figures 7 and 7A, the support unit 209 comprises a carousel, the detection sensor means 8 is mounted on a peripheral portion of the carousel. The carousel is rotatably movable with respect to the support surface 3. The carousel is, in particular, connected rotatably to the upper portion of the support frame 10 and can rotate around its own rotation axis.

Thanks to the mobility of the support unit 209 with respect to the support surface 3, it is possible to rotate the sensors 8 during the execution of the thermoforming cycle to detect the entire geometry assumed by the article.

In a version not shown, the detection sensor means may be mounted on the plate-holding frame.

A control method is described below for controlling a thermoforming cycle performed by the thermoforming machine described above on an article made of plastics.

The method comprises a step of setting at least one thermal power value for a plurality of heating elements 11 and/or a time value for delivering thermal power delivered by the plurality of heating elements 11, where each heating element is associated with a respective area of article 2 for heating it.

The method comprises a step of creating a desired geometry representative of a geometry of the article 2 assumed during an operational step of the thermoforming cycle. The desired geometry may be defined, in particular, by a set of coordinates of points or parts of a virtual article, corresponding to an article without defects. The desired geometry may be obtained from design or experimental considerations. For example, the desired geometry may comprise virtual geometry obtained using industrial process optimization and simulation software, such as CAD-CAM software. Through the simulation software it is possible to set the process parameters of the thermoforming cycle (for example the virtual thermal power supplied to the article, the clamping force applied on the article by the frame element, the air flow rate in pressure, and so on), and start a simulation of the cycle.

The operational step may be a step subsequent to the step of heating the article 2 and a step of deforming the article 2.

The deformation step may include inflating the article 2 by delivering a flow of fluid under pressure through the blowing means.

In this case the desired geometry relates to an inflated, deformed article, for example in the shape of a half-sphere.

The deformation step may also include the step of making the article 2 adhere to a contact surface of the forming mold, creating a state of vacuum between the mold and the article.

In this case the desired geometry relates to a finished article, which has assumed the geometry of the mold.

The geometry of the article comprises a plurality of parts, or a plurality of points, each part is associated, i.e. corresponds to a respective real area of the article 2, whether it is in a deformed/inflated state, or when it has assumed the geometry of the mold.

The method comprises a step of detecting a real geometry assumed by article 2 in an operational step of the thermoforming cycle, by means of the detection sensor means 8 included in the thermoforming machine 1 and previously described.

A step of the method may involve producing a signal associated with the detected geometry of the article.

A step of the method may comprise processing the produced signal. This step may be implemented by means of control means not illustrated. The control means may be physically connected to the detection sensor means, for example by means of a wired connection, or it may be connected by means of a wireless connection. Signal processing is used to create the detected geometry.

The detected geometry also comprises a further plurality of parts, or a further plurality of points, and each of these further parts is associated with a respective area of the article 2, which is deformed/inflated, or when it has assumed the geometry of the mold.

The thermoforming machine 1 comprises storage means associated with the control means, not shown, arranged to store the real geometry detected by the detection sensor means.

A step of the method may comprise verifying compliance with a relationship criterion between the actual detected geometry and the desired geometry.

As mentioned, to ensure that the article 2, in the operational step of deformation and/or forming, does not present defects it is necessary that the real geometry of the article corresponds, unless a dimensional tolerance, to the desired geometry.

A step of the method may comprise comparing the actual detected geometry with the desired geometry.

This step comprises superimposing the actual geometry on the desired geometry. This involves a processing, both of the real geometry detected and of the desired geometry, by the control means such that they are in a superimposable dimensional format.

The thermoforming machine 1 may comprise a display 12, for example of the tactile type, to display information relating to the thermoforming process, to insert instructions on the forming process itself, and to display information on the comparison between the detected actual geometry and the desired geometry.

A step of the method may comprise calculating a dimensional difference between each part of the desired geometry and each further part of the detected geometry. This step may include using program instructions and/or algorithms which, starting, for example, from pixels return a numeric or tabular data representative of a particular characteristic of each part of the real geometry detected, for example a thickness value assumed by each part or a height or position value assumed by each part with respect to the support surface 3 on which the article 2 rests. For example, the height is measured in a direction orthogonal to the support surface 3. What described may be repeated also for the desired geometry, obtaining a further thickness value assumed by each further part of the detected geometry or a height or position value assumed by each further part with respect to the support surface 3.

The step of calculating a dimensional difference comprises calculating a difference in thickness and/or height and/or position between the obtained dimensional values of each part and each further part. This also makes it possible to evaluate shape variations between the two geometries, for example variations in straightness, flatness, parallelism and so on.

A step of the method may comprise modifying the thermal power value to be applied to one or more heating elements and/or the delivery time of thermal power delivered by one or more heating elements 11 in a subsequent thermoforming cycle based on a law (known) that correlates the thermal power and/or the delivery time of thermal power to the calculated dimensional difference, if at least one calculated dimensional difference between each part and each further part is different from a preset limit value.

With limit value we mean a value that is preset by the user to which a dimensional tolerance range is associated including a lower dimensional limit and an upper dimensional limit.

In particular, the thermal power value and/or the time of delivery of thermal power of a heating element 11 will be modified if the dimensional difference calculated in the area of the article associated with this heating element (in particular between the part of the desired geometry and the further part of the detected geometry) is substantially greater or less than the preset limit value, i.e. greater than the upper dimensional limit or less than the lower dimensional limit.

The modification step therefore takes place with a feedback control.

The step of modifying the thermal power value and/or the thermal power delivery time comprises calculating a further power value and/or a further thermal power delivery time value on the basis of the aforementioned law, which is added or subtracted from the initial thermal power value and/or the initial thermal power delivery time value applied to one or more heating elements.

It may therefore occur that the thermal power value and/or the thermal power delivery time value can be varied only for some heating elements, or for all the heating elements.

Alternatively, or in addition to the above, the control method may comprise a step of modifying, in a subsequent thermoforming cycle, a flow rate value of the fluid flow under pressure delivered by the blowing means on the basis of a further law that correlates the aforementioned flow rate with the aforementioned dimensional difference, if at least one dimensional difference calculated between each part and each further part is different from the preset limit value.

It should be noted that, by applying the control method according to the invention, it is not necessary to have expert personnel to reduce as much as possible the time required for the thermoforming cycle to reach full capacity.

It should also be noted that thanks to the thorough and complete point control carried out on the entire geometry of the article, it is possible to modify the process parameters of the thermoforming cycle only in some areas of the article, in particular in the areas where a defect is obtained. Thanks to the "feedback" control mode, a few thermoforming cycles are sufficient, at most even one, before reaching the optimal process conditions.

This naturally contributes to reducing the number of rejects with consequent reduction of production costs.

Furthermore, the "feedback" mode allows the production quality to be kept almost constant over time, while at the same time ensuring the reproducibility of the process parameters.

## Claims

1. Method for controlling a thermoforming cycle on an article (2) made of thermoplastic material in a thermoforming machine (1), comprising:
- setting at least one operating parameter of said thermoforming cycle;
- generating a desired geometry for said article (2) in an operative step of said thermoforming cycle;
- detecting an actual geometry assumed by said article (2) in said operating step by means of detection sensor means (8);
- verifying compliance with a relationship criterion between said detected actual geometry and said desired geometry;
- modifying said operating parameter of said thermoforming cycle according to the result of said verifying**;**
**characterized in that said at least one operating parameter comprises a thermal power value for a plurality of heating elements (11) and/or a thermal power delivery time value delivered by a plurality of heating elements (11), each heating element being associated with at least one respective zone of said article (2) to heat said at least one respective zone,** such that **said thermal power value and/or said thermal power delivery time value may be different for each heating element (11).**

2. Control method according to claim 1, wherein said criterion comprises calculating at least one dimensional difference between a part of said desired geometry and a part of said detected geometry; said calculating at least one dimensional difference comprising, in particular, calculating at least one difference in thickness, and/or in position, and/or in height, between said actual geometry and said desired geometry.

3. Control method according to claims 2, wherein the method comprises a step of modifying said thermal power value and/or said thermal power delivery time value to be applied to one or more heating elements based on a law that correlates said thermal power and/or said thermal power delivery time to said at least one dimensional difference, based on a comparison between said at least one dimensional difference and a preset limit value.

4. Control method according to any one of the preceding claims, wherein said operating step comprises a step of heating said article (2) and/or a step of deforming said heated article (2).

5. Control method according to claim **4,** wherein said deforming comprises inflating said article (2) by delivering a pressurized fluid flow by blowing means to form a bubble.

6. Control method according to claim **5,** wherein said operating parameter comprises a flow rate value of said pressurized fluid flow.

7. Control method according to claim **6** when claim **4** depends on claim 2, wherein the method comprises a step of modifying said flow rate value of said pressurized fluid flow based on a further law correlating said pressurized fluid flow to said at least one dimensional difference, based on a comparison between said at least one dimensional difference and a preset limit value.

8. Control method according to any one of claims **4 to 7,** wherein said deforming comprises adhering said heated article (2) to a contact surface of a forming mold included in said thermoforming machine (1).

9. Thermoforming machine (1) for performing a thermoforming cycle on an article (2) in thermoplastic material, the thermoforming machine being adapted for implementing the method according to any one of claims 1 to 8, the thermoforming machine comprising:
- detection sensor means (8) arranged to detect an actual geometry assumed by said article (2) in an operative step of said thermoforming cycle and produce a signal associated with said actual detected geometry;
- control means configured to process said produced signal, generate a desired geometry of said article (2), verifying compliance with a relationship criterion between said real geometry and said desired geometry, and modifying an operating parameter of said thermoforming cycle depending on the result of said verification**;**
- **a plurality of heating elements (11) each arranged to heat a respective area of said article (2).**

10. Thermoforming machine (1) according to claim **9,** wherein said criterion comprises calculating at least one dimensional difference between at least one part of said desired geometry and at least one part of said detected geometry and said control means is further configured to compare said at least one difference dimensional with a preset limit value; said control means being further configured to modify an initial thermal power value to be applied to one or more heating elements of said plurality of heating elements (11) and/or a thermal power delivery time value delivered by said plurality of heating elements (11) on the basis of a law that correlates the thermal power and/or the thermal power delivery time to said at least one dimensional difference, based on a comparison between said at least one dimensional difference and a preset limit value; said thermoforming machine comprising, in particular, blowing means connected to a source of pressurized fluid arranged to deliver a flow of pressurized fluid on said heated article, said control means being further configured to modify a value of flow rate of said flow of pressurized fluid on the basis of a further law which correlates said flow rate with said at least one dimensional difference, based on a comparison between said at least one dimensional difference and a preset limit value.

11. Thermoforming machine (1) according to claim **9 or 10,** wherein said detection sensor means (8) is mounted on a support unit (9; 109; 209; 309) included in said thermoforming machine (1), said support unit (9; 109; 209; 309) facing towards a support surface (3) of said thermoforming machine (1) on which said article (2) rests and/or wherein said thermoforming machine (1) comprises a frame element (5) movable away from, and/or approaching towards, said article (2), said detection sensor means (8) being mounted on said frame element (5).

12. Thermoforming machine (1) according to claim **11,** wherein said support unit (9; 309) is fixed with respect to said support surface (3); wherein:
- said support unit (9) comprises a support grid, said detection sensor means (8) being mounted on said support grid in such a way as to define a sensor matrix; and/or wherein
- said support unit (309) includes at least one support rod.

13. Thermoforming machine (1) according to claim **11,** wherein said support unit (109; 209) is movable with respect to said support surface (3); wherein:
- said support unit (109) comprises a support bar, said detection sensor means (8) being mounted, in particular in a row, on said support bar; and/or wherein
- said support unit (209) comprises a carousel, said detection sensor means (8) being mounted on a peripheral portion of said carousel.

14. Thermoforming machine (1) according to any one of claims **10 to 13,** wherein said detection sensor means (8) comprises a "Time of Flight" type camera, or a stereoscopic camera, or one or more photocells, or laser sensors, or ultrasonic sensors, or radar sensors, or magnetic sensors.

## Patentansprüche

1. Verfahren zur Steuerung eines Thermoform-Zyklus an einem Artikel (2), der aus thermoplastischem Material hergestellt ist, in einer Thermoform-Maschine (1), umfassend:
- Einstellen mindestens eines Betriebsparameters des Thermoform-Zyklus;
- Erzeugung einer gewünschten Geometrie für den Artikel (2) in einem Arbeitsschritt des Thermoform-Zyklus;
- Erfassen einer Ist-Geometrie, die der Artikel (2) in diesem Arbeitsschritt annimmt, mittels Erfassungssensorik (8);
- Überprüfung der Einhaltung einer Beziehungsbedingung zwischen der ermittelten Ist-Geometrie und der gewünschten Geometrie;
- Modifizieren der Betriebsparameter des Thermoform-Zyklus entsprechend dem Ergebnis der Überprüfung;
**dadurch gekennzeichnet, dass** der mindestens eine Betriebsparameter einen Wärmeleistungswert für eine Vielzahl von Heizelementen (11) und/oder einen von einer Vielzahl von Heizelementen (11) gelieferten Wärmeleistungslieferzeitwert umfasst, wobei jedes Heizelement mit mindestens einem jeweiligen Bereich des Artikels (2) assoziiert ist, um den mindestens einen jeweiligen Bereich zu erwärmen, so dass der Wärmeleistungswert und/oder der Wärmeleistungslieferzeitwert für jedes Heizelement (11) unterschiedlich sein kann.

2. Steuerungsverfahren nach Anspruch 1, wobei die Bedingung die Berechnung von mindestens einen Dimensionsunterschied zwischen einem Teil der gewünschten Geometrie und einem Teil der erfassten Geometrie umfasst; wobei die Berechnung des mindestens einen Dimensionsunterschieds insbesondere die Berechnung mindestens einer Differenz in Dicke und/oder in Position und/oder in Höhe zwischen der Ist-Geometrie und der gewünschten Geometrie umfasst.

3. Steuerungsverfahren nach Anspruch 2, wobei das Verfahren einen Schritt des Modifizierens des Wärmeleistungswerts und/oder des Wärmeleistungslieferzeitwerts umfasst, die auf ein oder mehrere Heizelemente auf der Grundlage eines Gesetzes anzuwenden ist, das den Wärmeleistungswert und/oder den Wärmeleistungslieferzeitwert mit dem mindestens einen Dimensionsunterschied korreliert, basierend auf einem Vergleich zwischen dem mindestens einen Dimensionsunterschied und einem vorbestimmter Grenzwert.

4. Steuerungsverfahren nach einem der vorigen Ansprüche, wobei der Arbeitsschritt einen Schritt der Erwärmung des Artikels (2) und/oder einen Schritt der Verformung des erwärmten Artikels (2) umfasst.

5. Steuerungsverfahren nach Anspruch 4, wobei die Verformung das Aufblasen des Artikels (2) durch Abgabe einer druckbeaufschlagten Fluidströmung durch Blasmittel zur Bildung einer Blase umfasst.

6. Steuerungsverfahren nach Anspruch 5, wobei der Betriebsparameter einen Strömungsratenwert der druckbeaufschlagten Fluidströmung umfasst.

7. Steuerungsverfahren nach Anspruch 6, wenn Anspruch 4 von Anspruch 2 abhängt, wobei das Verfahren einen Schritt der Modifizierung des Strömungsratenwerts der druckbeaufschlagten Fluidströmung basierend auf einem weiteren Gesetz umfasst, das die druckbeaufschlagte Fluidströmung mit dem mindestens einen Dimensionsunterschied korreliert, basierend auf einem Vergleich zwischen dem mindestens einen Dimensionsunterschied und einem vorbestimmten Grenzwert.

8. Steuerungsverfahren nach einem der Ansprüche 4 bis 7, wobei die Verformung Anhaften des erwärmten Artikels (2) an einer Kontaktfläche eines Formwerkzeugs in der Thermoform-Maschine (1) umfasst.

9. Thermoform-Maschine (1) zur Durchführung eines Thermoform-Zyklus an einem Artikel (2) aus thermoplastischem Material, wobei die Thermoform-Maschine zur Durchführung des Verfahrens nach einem der Ansprüche 1 bis 8 geeignet ist, wobei die Thermoform-Maschine Folgendes umfasst:
- Erfassungssensorik (8) zur Erkennung einer Ist-Geometrie, die von dem Artikel (2) in einem Arbeitsschritt des Thermoform-Zyklus angenommen wird und zur Erzeugung eines Signals, das mit der erfassten Ist-Geometrie assoziiert ist;
- Steuerungsmittel, die dazu ausgestaltet sind, das erzeugte Signal zu verarbeiten, eine gewünschte Geometrie des Artikels (2) zu erzeugen, Einhaltung einer Beziehungsbedingung zwischen der genannten Ist-Geometrie und der gewünschten Geometrie zu überprüfen, und einen Betriebsparameter des Thermoform-Zyklus in Abhängigkeit von dem Ergebnis der Überprüfung zu modifizieren;
- eine Vielzahl von Heizelementen (11), die jeweils so angeordnet sind, dass sie einen entsprechenden Bereich des Artikels (2) erwärmen.

10. Thermoform-Maschine (1) nach Anspruch 9, wobei die Bedingung das Berechnen mindestens eines Dimensionsunterschieds zwischen mindestens einem Teil der gewünschten Geometrie und mindestens einem Teil der erfassten Geometrie umfasst und wobei das Steuerungsmittel ferner dazu ausgestaltet ist, den mindestens einen Dimensionsunterschied mit einem vorbestimmten Grenzwert zu vergleichen; wobei das Steuerungsmittel ferner dazu ausgestaltet ist, einen anfänglichen Wärmeleistungswert, der auf ein oder mehrere Heizelemente der Vielzahl von Heizelementen (11) anzuwenden ist, und/oder einen Wärmeleistungslieferzeitwert, der von der Vielzahl von Heizelementen (11) geliefert wird, basierend auf einem Gesetz zu modifizieren, das die Wärmeleistung und/oder die Wärmeleistungslieferzeit mit dem mindestens einen Dimensionsunterschied korreliert, basierend auf einem Vergleich zwischen dem mindestens einen Dimensionsunterschied und einem vorbestimmten Grenzwert; wobei die Thermoform-Maschine insbesondere Blasmittel umfasst, die mit einer Quelle für druckbeaufgeschlagtes Fluid verbunden ist und so angeordnet ist, dass sie einen druckbeaufschlagten Fluidstrom auf den erwärmten Artikel abgibt, wobei das Steuerungsmittel ferner so ausgestaltet ist, dass es einen Wert der Strömungsrate des druckbeaufschlagten Fluidstroms basierend auf einem weiteren Gesetz modifiziert, das die Strömungsrate mit dem mindestens einen Dimensionsunterschied korreliert, basierend auf einem Vergleich zwischen dem mindestens einen Dimensionsunterschied und einem vorbestimmten Grenzwert.

11. Thermoform-Maschine (1) nach Anspruch 9 oder 10, wobei die Erfassungssensorik (8) auf einer in der Thermoform-Maschine (1) enthaltenen Stützeinheit (9; 109; 209; 309) montiert ist, wobei die Stützeinheit (9; 109; 209; 309) einer Stützfläche (3) der Thermoform-Maschine (1) zugewandt ist, auf die der Artikel (2) gestützt ist, und/oder wobei die Thermoform-Maschine (1) ein Rahmenelement (5) umfasst, das von dem Artikel (2) weg bewegt werden kann und/oder sich diesem nähert, wobei die Erfassungssensorik (8) an dem Rahmenelement (5) angebracht ist.

12. Thermoform-Maschine (1) nach Anspruch 11, wobei die Stützeinheit (9; 309) in Bezug auf die Stützfläche (3) fixiert ist; wobei:
- die Stützeinheit (9) ein Stützgitter umfasst, wobei die Erfassungssensorik (8) auf dem Stützgitter so angebracht ist, dass sie eine Sensormatrix bildet; und/oder wobei
- die Stützeinheit (309) mindestens einen Stützstab enthält.

13. Thermoform-Maschine (1) nach Anspruch 11, wobei die Stützeinheit (109; 209) in Bezug auf die Stützfläche (3) beweglich ist; wobei:
- die Stützeinheit (109) eine Stützleiste aufweist, wobei die Erfassungssensorik (8), insbesondere in einer Reihe auf der Stützleiste angebracht ist; und/oder wobei
- Stützeinheit (209) ein Karussell umfasst, wobei die Erfassungssensorik (8) an einem peripheren Teil des Karussells angebracht ist.

14. Thermoform-Maschine (1) nach einem der Ansprüche 10 bis 13, wobei die Erfassungssensorik (8) eine "Time of Flight"-Kamera oder eine Stereokamera oder eine oder mehrere Fotozellen oder Lasersensoren oder Ultraschallsensoren oder Radarsensoren oder magnetische Sensoren umfasst.

## Revendications

1. Procédé de commande d'un cycle de thermoformage d'un article (2) fait d'un matériau thermoplastique dans une machine de thermoformage (1), comprenant :
- le réglage d'au moins un paramètre de fonctionnement dudit cycle de thermoformage ;
- la génération d'une géométrie souhaitée pour ledit article (2) dans une étape opérationnelle dudit cycle de thermoformage ;
- la détection d'une géométrie réelle prise par ledit article (2) dans ladite étape opérationnelle par l'intermédiaire d'un moyen formant capteur de détection (8) ;
- la vérification du respect d'un critère de relation entre ladite géométrie réelle détectée et ladite géométrie souhaitée ;
- la modification dudit paramètre de fonctionnement dudit cycle de thermoformage en fonction du résultat de ladite vérification ;
**caractérisé en ce que** ledit au moins un paramètre de fonctionnement comprend une valeur de puissance thermique pour une pluralité d'éléments chauffants (11) et/ou une valeur de temps de fourniture de puissance thermique délivrée par une pluralité d'éléments chauffants (11), chaque élément chauffant étant associé à au moins au moins une zone respective dudit article (2) pour chauffer ladite au moins une zone respective, de sorte que ladite valeur de puissance thermique et/ou ladite valeur de temps de fourniture de puissance thermique puissent être différentes pour chaque élément chauffant (11).

2. Procédé de commande selon la revendication 1, dans lequel ledit critère comprend le calcul d'au moins une différence dimensionnelle entre une partie de ladite géométrie souhaitée et une partie de ladite géométrie détectée ; ledit calcul d'au moins une différence dimensionnelle comprenant, notamment, le calcul d'au moins une différence d'épaisseur, et/ou de position, et/ou de hauteur, entre ladite géométrie réelle et ladite géométrie souhaitée.

3. Procédé de commande selon la revendication 2, lequel procédé comprend une étape de modification de ladite valeur de puissance thermique et/ou de ladite valeur de temps de fourniture de puissance thermique à appliquer à un ou plusieurs éléments chauffants en fonction d'une loi qui corrèle ladite puissance thermique et/ou ledit temps de fourniture de puissance thermique à ladite au moins une différence dimensionnelle, sur la base d'une comparaison entre ladite au moins une différence dimensionnelle et une valeur limite prédéfinie.

4. Procédé de commande selon l'une des revendications précédentes, dans lequel ladite étape opérationnelle comprend une étape de chauffage dudit article (2) et/ou une étape de déformation dudit article chauffé (2).

5. Procédé de commande selon la revendication 4, dans lequel ladite déformation comprend le gonflage dudit article (2) en délivrant un flux de fluide sous pression par un moyen de soufflage pour former une bulle.

6. Procédé de commande selon la revendication 5, dans lequel ledit paramètre de fonctionnement comprend une valeur de débit dudit flux de fluide sous pression.

7. Procédé de commande selon la revendication 6 lorsque la revendication 4 dépend de la revendication 2, dans lequel le procédé comprend une étape de modification de ladite valeur de débit dudit flux de fluide sous pression en fonction d'une autre loi qui corrèle ledit flux de fluide sous pression à ladite au moins une différence dimensionnelle, sur la base d'une comparaison entre ladite au moins une différence dimensionnelle et une valeur limite prédéfinie.

8. Procédé de commande selon l'une des revendications 4 à 7, dans lequel ladite déformation comprend le collage dudit article chauffé (2) sur une surface de contact d'un moule de formage inclus dans ladite machine de thermoformage (1).

9. Machine de thermoformage (1) pour réaliser un cycle de thermoformage sur un article (2) fait de matériau thermoplastique, la machine de thermoformage étant adaptée pour la mise en œuvre du procédé selon l'une des revendications 1 à 8, la machine de thermoformage comprenant :
- un moyen formant capteur de détection (8) agencé pour détecter une géométrie réelle prise par ledit article (2) dans une étape opérationnelle dudit cycle de thermoformage et produire un signal associé à ladite géométrie réelle détectée ;
- un moyen de commande configuré pour traiter ledit signal produit, générer une géométrie souhaitée dudit article (2), vérifier le respect d'un critère de relation entre ladite géométrie réelle et ladite géométrie souhaitée, et modifier un paramètre de fonctionnement dudit cycle de thermoformage en fonction du résultat de ladite vérification ;
- une pluralité d'éléments chauffants (11) agencés chacun pour chauffer une zone respective dudit article (2) .

10. Machine de thermoformage (1) selon la revendication 9, dans laquelle ledit critère comprend le calcul d'au moins une différence dimensionnelle entre au moins une partie de ladite géométrie souhaitée et au moins une partie de ladite géométrie détectée et ledit moyen de commande est en outre configuré pour comparer ladite au moins une différence dimensionnelle à une valeur limite prédéfinie ; ledit moyen de commande étant en outre configuré pour modifier une valeur de puissance thermique initiale à appliquer à un ou plusieurs éléments chauffants de ladite pluralité d'éléments chauffants (11) et/ou une valeur de temps de fourniture de puissance thermique délivrée par ladite pluralité d'éléments chauffants (11) en fonction d'une loi qui corrèle la puissance thermique et/ou le temps de fourniture de puissance thermique à ladite au moins une différence dimensionnelle, sur la base d'une comparaison entre ledit au moins une différence dimensionnelle et une valeur limite prédéfinie ; ladite machine de thermoformage comprenant, notamment, un moyen de soufflage connecté à une source de fluide sous pression agencée pour délivrer un flux de fluide sous pression sur ledit article chauffé, ledit moyen de commande étant en outre configuré pour modifier une valeur de débit dudit flux de fluide sous pression en fonction d'une autre loi qui corrèle ledit débit avec ladite au moins une différence dimensionnelle, sur la base d'une comparaison entre ladite au moins une différence dimensionnelle et une valeur limite prédéfinie.

11. Machine de thermoformage (1) selon la revendication 9 ou 10, dans laquelle ledit moyen formant capteur de détection (8) est monté sur une unité de support (9 ; 109 ; 209 ; 309) incluse dans ladite machine de thermoformage (1), ladite unité de support (9 ; 109 ; 209 ; 309) tournée vers une surface de support (3) de ladite machine de thermoformage (1) sur laquelle repose ledit article (2) et/ou dans laquelle ladite machine de thermoformage (1) comprend un élément de cadre (5) mobile de façon à s'éloigner et/ou à se rapprocher dudit article (2), ledit moyen formant capteur de détection (8) étant monté sur ledit élément de cadre (5).

12. Machine de thermoformage (1) selon la revendication 11, dans laquelle ladite unité de support (9 ; 309) est fixe par rapport à ladite surface de support (3) ; dans laquelle :
- ladite unité de support (9) comprend une grille de support, ledit moyen formant capteur de détection (8) étant monté sur ladite grille de support de manière à définir une matrice de capteurs ; et/ou dans laquelle
- ladite unité de support (309) inclut au moins une tige de support.

13. Machine de thermoformage (1) selon la revendication 11, dans laquelle ladite unité de support (109 ; 209) est mobile par rapport à ladite surface de support (3) ; dans laquelle :
- ladite unité de support (109) comprend une barre de support, ledit moyen formant capteur de détection (8) étant monté, notamment en rangée, sur ladite barre de support ; et/ou dans laquelle
- ladite unité de support (209) comprend un carrousel, ledit moyen formant capteur de détection (8) étant monté sur une partie périphérique dudit carrousel.

14. Machine de thermoformage (1) selon l'une des revendications 10 à 13, dans laquelle ledit moyen formant capteur de détection (8) comprend une caméra de type « à temps de vol », ou une caméra stéréoscopique, ou une ou plusieurs cellules photoélectriques, ou des capteurs laser, ou des capteurs à ultrasons, ou des capteurs radar, ou des capteurs magnétiques.
